# FASCICULE DE BREVET EUROPEEN

(11) **EP 0 553 013 B1**
(45) Date de publication et mention de la délivrance du brevet: **12.11.1997**
(21) Numéro de dépôt: 93400105.8
(22) Date de dépôt: 18.01.1993
(51) Int. Cl.: G11B 7/26, G11B 7/24

(54) **Procédé pour la fabrication de matrices de pressage, notamment pour réalisation de disques à lecture optique**
Verfahren zur Herstellung von Matrizen, insbesondere zur Herstellung von optichen Platten
Method of producing dies, particularly for the manufacture of optical disks

(30) Priorité: 24.01.1992 FR 9200778
(43) Date de publication de la demande: 28.07.1993
(73) Titulaire: DIGIPRESS, F-14050 Caen Cédex (FR)
(72) Inventeur: Ledieu, Jean, F-78121 Crespieres (FR); Dufresne, Jean-François, F-14000 Caen (FR)
(74) Mandataire: Armengaud Ainé, Alain

(56) Documents cités:
- EP-A- 0 323 678
- EP-A- 0 325 330
- EP-A- 0 328 212
- EP-A- 0 353 392
- EP-A- 0 429 346
- EP-A- 0 447 711

## Description

La présente invention est relative à un procédé de fabrication de matrices de pressage de disques, en particulier de disques optiques.

L'état de la technique concernant la fabrication de telles matrices consiste notamment à déposer sur un support ou substrat en verre, une couche de résine photosensible, puis à enregistrer une information sur cette couche de résine au moyen d'un faisceau d'un rayonnement approprié, notamment d'un faisceau laser, à développer cette couche, c'est-à-dire à éliminer les parties de celle-ci où l'information a été ainsi transférée de manière à découvrir le support dans les zones correspondantes, puis à créer dans ce support à travers les parties ainsi découvertes, des micro-cuvettes qui correspondent au signal à reproduire.

Une fois le reliquat de la résine retiré, l'ensemble constitue un disque maître à partir duquel peuvent être obtenues des matrices ou répliques reproduisant en relief ces micro-cuvettes, ces matrices permettant ensuite, par pressage d'un matériau en particulier du genre polycarbonate, la réalisation de disques qui à leur tour portent en creux les cuvettes représentatives des informations à lire sur ces disques. Notamment, le disque maître peut être utilement revêtu d'une couche métallique mince, généralement en argent, qui épouse le profil des micro-cuvettes, avant d'être recouverte elle-même par galvanoplastie d'une couche complémentaire de nickel qui va constituer la matrice souhaitée, en présentant en saillie les micro-reliefs correspondant aux micro-cuvettes préalablement formées dans le substrat et qui, en réplique sur le disque final, pourront être lues par les procédés optiques habituels.

Un inconvénient majeur de cette technique de fabrication réside dans la nécessité d'insoler la résine photosensible avec un faisceau laser, ce qui implique l'usage d'une machine très sophistiquée ne pouvant être exclusivement utilisée que par des professionnels et qui nécessite par ailleurs une maintenance très poussée. Notamment, le faisceau laser doit être guidé par un ensemble mécanique et optique très complexe de façon à fournir avec une précision extrême et une parfaite reproductibilité la spirale continue exactement centrée qui va créer dans le support, le sillon imaginaire très étroit le long duquel sont disposées les micro-cuvettes successives.

De même, on connaît le processus d'enregistrement de disques optiques de type "WORM", (write once, read many) ou encore à écriture unique et à lecture multiple, qui consiste à enregistrer des informations directement sur un substrat en polycarbonate recouvert d'une couche sensible à l'aide d'une simple diode laser, l'écriture effectuée sur le disque pouvant ainsi être réalisée au moyen d'un appareil simple, largement diffusé dans le public et d'un coût réduit.

Les disques de type "WORM" sont ainsi constitués d'un substrat prégravé recouvert d'une ou plusieurs couches sensibles qui se modifient au contact du faisceau issu de la diode laser, en particulier en réalisant par ablation thermique les micro-cuvettes représentatives de l'information à enregistrer.

De tels disques où la modification de la couche sensible s'accompagne d'une variation de la réflectivité du matériau qui la constitue, sont notamment décrits par exemple dans le brevet américain US-A-4 414 273, le brevet européen EP-A-0 130 026 ou encore dans la revue "Mémoires optiques et systèmes" N° 72 - Mars 89, page 5 et suivantes. L'enregistrement de ces disques est simple, d'usage facile même par un non professionnel et n'exige qu'un appareil relativement peu complexe.

La demande de brevet européen EP-A-0 447 711 décrit un procédé de fabrication d'un disque maître et d'une matrice de pressage. EP-A- 0 325 330, EP-A- 0 353 392 et EP-A- 0 328 212 se rapportent à des procédés de fabrication de disques à lecture optique.

La présente invention a pour objet un procédé qui vise à la réalisation d'une matrice servant au pressage de disques optiques, susceptible d'être obtenue de manière plus économique qu'avec les procédés classiques, en permettant notamment à l'utilisateur de réaliser lui-même l'enregistrement souhaité au moyen d'un enregistreur standard du type "WORM", disponible dans le commerce et d'une utilisation simple par toute personne non particulièrement spécialisée, aux lieu et place d'une machine professionnelle très coûteuse.

Le procédé de l'invention est défini à la revendication 1.

Selon le cas, la base de temps intégrée dans le préformatage du disque peut être obtenue, soit par une wobulation dans le sillon continu de la spirale, soit correspondre à des formats déjà spécifiés par les normes précitées, ces dispositions permettant dans tous les cas l'utilisation d'un matériel d'enregistrement de type "WORM", disponible dans le commerce et d'un coût particulièrement réduit.

Avantageusement, le substrat est réalisé en verre ou en polycarbonate, ou encore en tout autre matériau approprié, le faisceau étant délivré par un appareil du commerce et présentant une longueur d'onde ordinairement égale à 780 nm.

Le revêtement réflecteur déposé sur la couche sensible et la couche de protection externe sont éliminés après enregistrement de la couche de résine par pelage mécanique ou encore par plasma réactif, abrasion, dissolution chimique à l'acide ou par tout autre moyen approprié.

Une fois l'enregistrement de la couche sensible effectué, le revêtement métallique mince épousant le profil des micro-cuvettes est avantageusement réalisé en argent, la couche métallique finale constituant la matrice étant obtenue par croissance galvanoplastique de nickel.

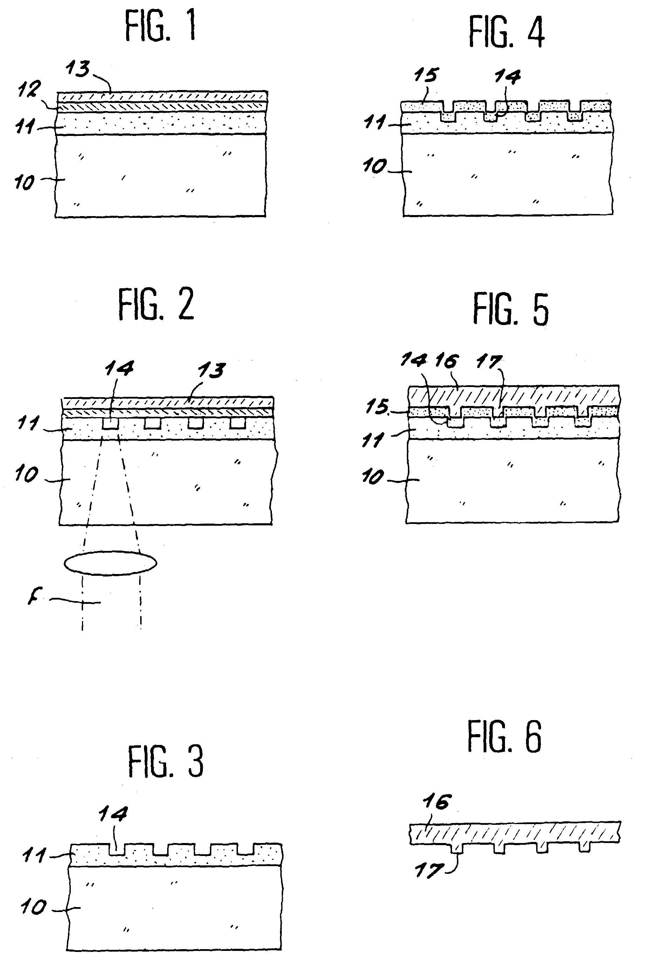

D'autres caractéristiques d'un procédé de fabrication de matrices de pressage pour disques optiques, apparaîront encore à travers la description qui suit d'un mode de mise en oeuvre de ce procédé, donné à titre indicatif et non limitatif, illustré par le dessin annexé sur lequel les Figures 1 à 6 sont des vues schématiques et successives représentant le traitement d'un substrat permettant d'aboutir à la matrice d'impression finale souhaitée.

Sur la Figure 1, on a représenté une fraction d'un disque "WORM" comportant notamment un substrat 10, en verre, polycarbonate ou tout autre matériau dur et rigide approprié, ce substrat étant de préférence préformaté, c'est-à-dire comportant des moyens pour assurer le guidage d'un faisceau destiné à enregistrer des informations codées. Sur le substrat 10 est déposée une couche 11 d'un matériau thermo-sensible au rayonnement issu d'une diode laser (non représentée sur le dessin), ce faisceau étant schématisé sous la référence f sur la Figure 2. La couche sensible 11 est elle-même recouverte d'une couche mince réflectrice 12, cette couche étant elle-même recouverte d'une couche externe complémentaire 13 de protection, éventuellement d'épaisseur plus importante, généralement réalisée au moyen d'un vernis organique.

Le faisceau f représenté sur la Figure 2 a une longueur d'onde généralement égale à 780 nm et est dirigé vers la couche thermo-sensible 11 à travers le substrat 10 de manière à être réfléchi par la couche 12 appliquée contre la couche thermo-sensible. Selon une caractéristique importante de l'invention, le substrat du disque est préformaté, c'est-à-dire comporte de fabrication un sillon continu ou discontinu, réalisé en conformité avec les normes internationales, en constituant selon le cas un préformatage dit composite continu ou échantillonné, ce sillon permettant d'assurer le guidage précis du faisceau issu de la diode laser, en contrôlant son positionnement radial de façon à suivre de manière précise la piste formée par ce sillon. En outre, ce préformatage intègre une base de temps, apte à permettre l'asservissement de la vitesse de déplacement relatif du substrat par rapport au faisceau, cette base de temps étant constituée, soit par une wobulation dans le sillon continue, soit être créée à partir de formats déjà spécifiés et conformes aux normes ci-dessus.

Le faisceau f permet ainsi de provoquer dans la couche thermo-sensible 11, par ablation thermique, des micro-cuvettes telles que 14, dont la répartition dans la couche 11 est la traduction d'une information codée à enregistrer dans cette dernière.

Dans l'étape suivante représentée sur La Figure 3, on procède à l'enlèvement du revêtement réflecteur 12 et de la couche de protection 13 préalablement disposés sur la couche thermo-sensible 11, de telle sorte que les micro-cuvettes 14 ménagées dans celle-ci deviennent apparentes. Cet enlèvement des couches 12 et 13 est réalisé par tous moyens convenables, en particulier par pelage mécanique, par action d'un plasma réactif, par abrasion ou encore par dissolution chimique.

Une fois cette opération réalisée, le substrat 10 revêtu de la couche 11 munie de ses micro-cuvettes 14 constitue un disque maître. A noter que, en variante, on peut prévoir de graver directement le substrat 10, notamment lorsque celui-ci est réalisé en verre, à travers ces micro-cuvettes comme on l'a déjà décrit dans la demande de brevet français 89.15261 du 21 Novembre 1989 au nom de la Société demanderesse pour "Procédé pour la fabrication d'un disque à lecture optique et disques obtenus par ce procédé", permettant notamment de conserver celui-ci à titre d'archive.

Dans l'étape suivante illustrée sur la Figure 4, le disque maître ainsi obtenu, qu'il soit gravé ou non, reçoit un revêtement métallique 15 qui de préférence est constitué par de l'argent, ce revêtement épousant étroitement le profil des micro-cuvettes.

On peut alors faire croître sur ce revêtement métallique, notamment par dépôt galvanoplastique, une couche épaisse 16 d'un autre métal, généralement du nickel, qui présente ainsi des micro-reliefs 17 constituant la réplique directe des micro-cuvettes 14, (Voir Figure 5) elles-mêmes représentatives de l'information enregistrée.

Dans une ultime étape, représentée sur la Figure 6, on sépare la couche épaisse de nickel 16 qui va constituer ainsi directement la matrice de pressage souhaitée, permettant la fabrication de disques qui à leur tour reproduiront en creux les micro-reliefs 17, donc les micro-cuvettes 14 de la couche sensible initiale.

On réalise ainsi un procédé de fabrication de disques, de conception très simple et d'une grande efficacité, qui présente l'avantage de pouvoir être mis en oeuvre au moyen d'une machine du commerce réalisant l'enregistrement direct de l'information codée dans la couche thermo-sensible du substrat. Bien entendu, des modifications secondaires pourraient être apportées au procédé, pour autant qu'elles ne modifient pas les caractéristiques essentielles de ce dernier définies dans la revendication 1, par exemple en ce qui concerne le choix des matériaux utilisés et du processus d'enlèvement des couches complémentaires une fois l'information enregistrée.

De même, la couche sensible est avantageusement une résine thermo-sensible et pourrait être de toute nature permettant l'obtention de micro-cuvettes.

## Revendications

1. Procédé pour la fabrication d'une matrice de pressage de disques à lecture optique, consistant, au moyen d'un appareil standard du commerce d'enregistrement d'information sur un disque standard du commerce comprenant un substrat rigide (10), une couche de résine thermosensible (11) déposée sur le substrat, un revêtement métallique mince réflecteur (12) recouvrant la couche thermosensible et une couche finale de protection externe (13) recouvrant le revêtement métallique, le substrat rigide (10) étant préformaté de manière à permettre le guidage d'un faisceau (f) issu d'une diode laser dudit appareil standard selon le sillon d'une spirale continue ou discontinue, cette spirale permettant le positionnement radial du faisceau par rapport au substrat et comportant une base de temps apte à autoriser l'asservissement de la vitesse de rotation du disque au cours de l'enregistrement des informations codées dans la couche de résine thermo-sensible (11) :
- à enregistrer sous forme de micro-cuvettes (14) obtenues par ablation thermique un signal correspondant à des informations codées dans la couche de résine thermo-sensible (11), ces micro-cuvettes étant réalisées sous l'effet d'un rayonnement (f) issu de ladite diode laser dirigé vers la couche thermosensible au travers dudit substrat,
- à éliminer le revêtement réflecteur et la couche protectrice pour découvrir les micro-cuvettes en vue de constituer un disque maître, à déposer sur la couche de résine comportant ainsi les micro-cuvettes un revêtement métallique mince (15) pour épouser le profil de ces micro-cuvettes,
- puis à déposer une couche métallique finale (16) sur le revêtement pour former une matrice d'impression comportant des micro-reliefs (17) correspondant aux micro-cuvettes,
- à séparer ladite couche métallique finale (16) des autres couches afin d'obtenir ladite matrice de pressage sur laquelle peuvent être pressés ultérieurement les disques à lecture optique à fabriquer.

2. Procédé selon la revendication 1, caractérisé en ce que la base de temps intégrée dans le préformatage du disque peut être obtenue, soit par une wobulation dans le sillon continu de la spirale, soit correspondre à des formats déjà spécifiés.

3. Procédé selon l'une des revendications 1 ou 2, caractérisé en ce que le substrat (10) est réalisé en verre ou en polycarbonate.

4. Procédé selon l'une quelconque des revendications 1 à 3, caractérisé en ce que le faisceau (f) présente une longueur d'onde ordinairement égale à 780 nm.

5. Procédé selon l'une quelconque des revendications 1 à 4, caractérisé en ce que l'enlèvement du revêtement réflecteur (12) et de la couche de protection externe (13) est réalisé, après enregistrement de la couche thermo-sensible, par pelage mécanique ou encore par plasma réactif, abrasion ou dissolution chimique.

6. Procédé selon l'une quelconque des revendications 1 à 5, caractérisé en ce que le revêtement métallique mince (15) épousant le profil des micro-cuvettes (14) est réalisé en argent, la couche métallique finale (16) constituant la matrice étant obtenue par croissance galvanoplastique de nickel.

7. Procédé selon l'une quelconque des revendications 1 à 6, caractérisé en ce que la couche de protection externe est réalisée au moyen d'un vernis organique.

## Patentansprüche

1. Verfahren zur Herstellung einer Matrize zum Pressen von optischen Speicherplatten, welches darin besteht, mit einem im Handel erhältlichen Standard-Gerät zur Aufzeichnung von Informationen auf eine im Handel erhältliche Standard-Platte mit einem starren Substrat (10), einer auf dem Substrat aufgebrachten wärmeempfindlichen Kunstharz-Schicht (11), einem dünnen reflektierenden Metallüberzug (12), der die wärmeempfindliche Schicht abdeckt und einer letzten äußeren Schutzschicht (13), die den Metallüberzug bedeckt, wobei das starre Substrat (10) so vorformatiert ist, daß es die Führung eines aus einer Laserdiode des Standard-Geräts herkommenden Strahlenbündels (f) entlang der Rille einer kontinuierlichen oder nicht kontinuierlichen Spirale ermöglicht, wobei diese Spirale die radiale Positionierung des Strahlenbündels bezüglich des Substrats ermöglicht und eine Zeitbasis aufweist, die die Regelung der Drehgeschwindigkeit der Platte während der Aufzeichnung der codierten Informationen in die wärmeempfindliche Schicht (11) ermöglicht:
- in Form von durch thermische Abtragung erhaltene Mikroküvetten (14) ein Signal aufzuzeichnen, das den in der wärmeempfindlichen Schicht (11) codierten Informationen entspricht, wobei diese Mikroküvetten durch von der Laserdiode ausgehende Strahlen (f) entstehen, die durch das Substrat auf die wärmeempfindliche Schicht gerichtet sind,
- den reflektierenden Überzug und die Schutzschicht zu entfernen, um die Mikroküvetten zum Vorschein zu bringen, um so eine Mutter-Speicherplatte zu erhalten und auf der die Mikroküvetten enthaltenden Kunstharzschicht einen dünnen Metallüberzug (15) aufzubringen, der sich eng an das Profil dieser Mikroküvetten anschmiegt,
- danach eine letzte Metallschicht (16) auf den Metallüberzug aufzubringen, um eine Druckmatrize zu bilden, die Mikroreliefs (17) aufweist, die den Mikroküvetten entsprechen,
- die letzte Metallschicht (16) von den anderen Schichten abzutrennen, um die Matrize zu erhalten, auf welcher später die herzustellenden optischen Speicherplatten gepreßt werden können.

2. Verfahren nach Anspruch 1, **dadurch gekennzeichnet, daß** die in die Vorformatierung der Speicherplatte integrierte Zeitachse entweder durch Wobbeln in der kontinuierlichen Rille der Spirale erhalten werden kann oder bereits spezifizierten Formaten entsprechen kann.

3. Verfahren nach einem der Ansprüche 1 oder 2, **dadurch gekennzeichnet, daß** das Substrat (10) aus Glas oder aus Polycarbonat hergestellt ist.

4. Verfahren nach einem der Ansprüche 1 bis 3, **dadurch gekennzeichnet, daß** das Strahlenbündel (f) eine Wellenlänge von gewöhnlich 780 nm aufweist.

5. Verfahren nach einem der Ansprüche 1 bis 4, **dadurch gekennzeichnet, daß** das Entfernen des reflektierenden Überzugs (12) und der äußeren Schutzschicht (13) nach Aufzeichnen der Informationen in der wärmeempfindlichen Schicht durch mechanisches Abziehen oder durch reaktives Plasma, Abrieb oder chemische Auflösung durchgeführt wird.

6. Verfahren nach einem der Ansprüche 1 bis 5, **dadurch gekennzeichnet, daß** der dünne Metallüberzug (15), der sich eng an das Profil der Mikroküvetten (14 anschmiegt, aus Silber ausgebildet ist und die letzte Metallschicht (16), die die Matrize bildet durch galvanoplastisches Wachsen von Nickel erhalten wird.

7. Verfahren nach einem der Ansprüche 1 bis 6, **dadurch gekennzeichnet, daß** die äußere Schutzschicht durch einen organischen Lack gebildet ist.

## Claims

1. Method for producing a die for pressing optical disks, consisting, by means of a standard commercial apparatus of recording information on a standard commercial disk comprising a rigid substrate (10), a layer of thermo-sensitive resin (11) deposited on the substrate, a thin reflective metallic coating (12) covering the thermo-sensitive layer and a final outer protection layer (13) covering the metallic coating, the rigid substrate (10) being preformatted in order to allow the guidance of a beam (f) coming from a laser diode of said standard apparatus according to the groove of a continuous or discontinuous spiral, this spiral allowing the radial positioning of the beam with respect to the substrate and comprising a time base able to authorise the control of the speed of rotation of the disk during the recording of the coded information in the layer of thermo-sensitive resin (11):
- of recording in the form of micro-hollows (14) obtained by thermal ablation a signal corresponding to coded information in the layer of thermo-sensitive resin (11), these micro-hollows being produced under the effect of radiation (f) coming from said laser diode directed towards the thermo-sensitive layer through said substrate,
- of eliminating the reflective coating and the protective layer in order to expose the micro-hollows with a view to constituting a master disk, of depositing on the layer of resin thus comprising the micro-hollows a thin metallic covering (15) in order to follow the profile of these micro-hollows,
- then of depositing a final metallic layer (15) on the covering in order to form an impression die comprising micro-reliefs (17) corresponding to the micro-hollows,
- of depositing said final metallic layer (15) of the other layers in order to obtain said pressing die on which may subsequently be pressed the optical disks to be manufactured.

2. Method according to Claim 1, characterised in that the time base integrated in the preformatting of the disk may be obtained, either by a wobulation in the continuous groove of the spiral, or corresponding to formats already specified.

3. Method according to one of Claims 1 or 2, characterised in that the substrate (10) is made from glass or polycarbonate.

4. Method according to one of Claims 1 to 3, characterised in that the beam (f) has a wavelength ordinarily equal to 780 nm.

5. Method according to one of Claims 1 to 4, characterised in that the removal of the reflective covering (12) and of the outer protective layer (13) is carried out, after recording of the thermo-sensitive layer, by mechanical peeling or even by reactive plasma, abrasion or chemical dissolving.

6. Method according to one of Claims 1 to 5, characterised in that the thin metallic covering (15) following the profile of the micro-hollows (14) is made from silver, the final metallic layer (16) constituting the die being obtained by galvanoplastic growth of nickel.

7. Method according to one of Claims 1 to 6, characterised in that the outer protective layer is produced by means of an organic varnish.
